# EUROPEAN PATENT APPLICATION

(11) **EP 1 326 063 A1**
(43) Date of publication of application: **09.07.2003**
(21) Application number: 00987745.7
(22) Date of filing: 25.12.2000
(51) Int. Cl.: G01J 5/48, G01J 5/10, H04N 7/18

(54) **TEMPERATURE INDICATOR AND TEMPERATURE MONITOR SYSTEM**

(30) Priority: 04.09.2000 JP 2000267567
(71) Applicant: Hayakawa, Noboru, Hirakata-shi, Osak 573-1103 (JP)
(72) Inventor: Hayakawa, Noboru, Hirakata-shi, Osak 573-1103 (JP)
(74) Representative: Schnekenbühl, Robert Matthias L.
(86) International application number: JP0009246
(87) International publication number: WO02023142

(57) **Abstract**

A temperature display device includes an imaging device for capturing a visible image, a two-dimensional radiation temperature sensor that is located so as to be capable of non-contact measuring of temperatures at multiple points within a visual field of the imaging device, and a display for displaying the captured image of the imaging device, in which the display divides the captured image into grid-like sections with division lines and displays the same, as well as displaying the division lines in different colors according to the temperature values in the respective sections measured by the two-dimensional radiation temperature sensor

## Description

### FIELD OF THE INVENTION

This invention relates to a temperature display device that achieves ease of visual recognition of temperature measurement points, an area with abnormal temperature rise and the like, as well as a temperature monitor system that utilizes the temperature display device.

### BACKGROUND OF THE INVENTION

There has heretofore been known a device that detects quantities of infrared rays radiated from an object in two-dimensional fashion, and displays the detected quantities in different colors according to differences in detected quantities, that is, the temperature variation. However, according to the device of this type, it is hard to recognize the correlation between the displayed information and an object as actually observed, that is, it is hard to recognize the temperature along with its corresponding area.

Also, in order to specify the positional relationship of the measured temperatures, a device, which indicates only a single point by such as a laser marker, is known. However, if several points are to be simultaneously measured, the corresponding number of the devices, and for specifying the location of each device, special jigs, as well as delicate mounting procedures and adjustments are required.

Further, while a thermal image device, which is usually called a thermography, can obtain a thermal image with a relatively high space resolution so that the measurement points can be largely recognized, it may be hard to recognize the measurement points due to blur of the thermal image which comes from the thermal distribution of an object, unlike to a visible image. Also, the device with an increased space resolution necessarily causes increased cost of the device itself.

### SUMMARY OF THE INVENTION

The present invention has been conceived to solve the above problems involved in the prior arts. Accordingly, it is an object of the present invention to provide a temperature display device and a temperature monitor system that can achieve ease of visual observation of temperature measurement points and ease of visual observation of an area with abnormal temperature rise without the necessity of plural devices, expensive devices or the like.

In order to achieve the above object, according to the present invention, there is provided a temperature display device, which includes an imaging device for capturing a visible image, a two-dimensional radiation temperature sensor that is located so as to be capable of non-contact measuring of temperatures at multiple points within a visual field of the imaging device, and a display for displaying the captured image of the imaging device, in which the display divides the captured image into grid-like sections with division lines and displays the same, as well as displaying the division lines in different colors according to the temperature values in the respective sections measured by the two-dimensional radiation temperature sensor.

According to the present invention as described above, it is possible to simultaneously make visual recognition of the visible image, and the measured temperature values which are recognizable by displaying the division lines in different colors, and therefore produce an advantage in that temperature measurement points can be easily recognized. Also, the radiation temperature sensor, which is capable of detecting temperature in two-dimensional fashion, achieves the simultaneous measuring of temperatures at multiple points, and hence the necessity of providing plural devices can be omitted. Also, even if the two-dimensional radiation temperature sensor has a relatively low resolution, accurate visual recognition of the temperature measurement points can be achieved even by the imaging device with only a certain resolution. Thus, it is possible to manufacture the imaging device at a relatively low cost in comparison to a thermal imaging device.

According to another aspect of the present invention, there is provided a temperature display device, which includes an imaging device for capturing a visible image, a two-dimensional radiation temperature sensor that is disposed so as to be capable of non-contact measuring of temperatures at multiple points within a visual field of the imaging device, and a display for displaying the captured image of the imaging device, in which the display divides the captured image into grid-like sections and displays the same, as well as displaying a measured temperature value of each grid-like section in the form of numeric digits.

According to the present invention as described above, it is possible to simultaneously make visual recognition of the visible image, and the measured temperature values which are recognizable by displaying a measured temperature of each grid-like section in the form of numeric digits, and therefore produce an advantage in that temperature measurement points can be easily recognized. Also, the radiation temperature sensor, which is capable of detecting temperature in two-dimensional fashion, achieves the simultaneous measuring of temperatures at multiple points, and hence the necessity of providing plural devices can be omitted. Also, even if the two-dimensional radiation temperature sensor has a relatively low resolution, accurate visual recognition of the temperature measurement points can be achieved even by the imaging device with only a certain resolution. Thus, it is possible to manufacture the imaging device at a relatively low cost in comparison to a thermal imaging device.

According to still another aspect of the present invention, there is provided a temperature display device, which includes an imaging device for capturing a visible image, a two-dimensional radiation temperature sensor that is disposed so as to be capable of non-contact measuring of temperatures at multiple points within a visual field of the imaging device, and a display for displaying the captured image of the imaging device, in which the display divides the captured image into grid-like sections with division lines, and, if a temperature value in any one of the grid-like sections exceeds a certain value, displays corresponding division lines in blinking mode.

According to the present invention as described above, it is possible to simultaneously make visual recognition of the visible image, and an area with abnormal temperature rise, which is recognizable by displaying the corresponding division lines of the visible image in blinking mode, and therefore produce an advantage in that the area with abnormal temperature rise (an area with its measured temperature exceeding a predetermined value) can be visually recognized in easy manner. Also, the radiation temperature sensor, which is capable of detecting temperature in two-dimensional fashion, achieves the simultaneous measuring of temperatures at multiple points, and hence the necessity of providing plural devices can be omitted. Also, even if the two-dimensional radiation temperature sensor has a relatively low resolution, accurate visual observation of the area with abnormal temperature rise can be achieved even by the imaging device with only a certain resolution. Thus, it is possible to manufacture the imaging device at a relatively low cost in comparison to a thermal imaging device.

According to yet another aspect of the present invention, there is provided a temperature display device, which includes an imaging device for capturing a visible image, a two-dimensional radiation temperature sensor that is disposed so as to be capable of non-contact measuring of temperatures at multiple points within a visual field of the imaging device, and a display for displaying the captured image of the imaging device, in which the display divides the captured image into grid-like sections with division lines, and, if a temperature value measured within any one of the grid-like sections exceeds a certain value, displays an area of the captured image in that section in blinking mode.

According to the present invention as described above, it is possible to simultaneously make visual recognition of the visible image, and an area with abnormal temperature rise, which is recognizable by displaying a corresponding area of the visible image within a section with abnormal temperature rise (an area with its measured temperature exceeding a predetermined value) in blinking mode, and therefore produce an advantage in that the area with abnormal temperature rise can be easily recognized. Also, the radiation temperature sensor, which is capable of detecting temperature in two-dimensional fashion, achieves the simultaneous measuring of temperatures at multiple points, and hence the necessity of providing plural devices can be omitted. Also, even if the two-dimensional radiation temperature sensor has a relatively low resolution, accurate visual recognition of the area with abnormal temperature rise can be achieved even by the imaging device with only a certain resolution. Thus, it is possible to manufacture the imaging device at a relatively low cost in comparison to a thermal imaging device.

According to another aspect of the present invention, there is provided a temperature display device, which includes an imaging device for capturing a visible image, a two-dimensional radiation temperature sensor that is disposed so as to be capable of non-contact measuring of temperatures at multiple points within a visual field of the imaging device, and a display for displaying the captured image of the imaging device, in which the display divides the captured image into grid-like sections with division lines, and if a temperature measured within any one of the grid-like sections exceeds a certain value, displays an area of the captured image in that section in blinking mode in a different color assigned to the measured temperature value.

According to the present invention as described above, it is possible to simultaneously make visual recognition of the visible image, and an area with abnormal temperature rise, which is recognizable by displaying a corresponding area of the visual image within a section with abnormal temperature rise (an area with its measured temperature exceeding a predetermined value) in blinking mode in a different color assigned to the measured temperature value, and therefore produce an advantage in that the area with abnormal temperature rise can be easily recognized. Also, the radiation temperature sensor, which is capable of detecting temperature in two-dimensional fashion, achieves the simultaneous measuring of temperatures at multiple points, and therefore the necessity of providing plural devices can be omitted. Also, even if the two-dimensional radiation temperature sensor has a relatively low resolution, accurate visual recognition of the area with abnormal temperature rise can be achieved even by the imaging device with only a certain resolution. Thus, it is possible to manufacture the imaging device at a relatively low cost in comparison to a thermal imaging device.

According to still another object of the present invention, there is provided a temperature monitor system, which includes client computers connected to any one of the aforementioned temperature display devices, and an administration server connected to the client computers via the Internet, in which the administration server is capable of receiving output data of the temperature display device.

According to the invention as described above, the administration server, which is connected to the Internet and capable of receiving the output data of the temperature display device, such as a captured image of the imaging device and a measured value of the two-dimensional radiation temperature sensor, enables temperature control even from a remote location, and in the event of abnormal temperature rise, notification of such fact from the administration server to a predetermined client computer can be made by email or the like.

### BRIEF DESCRIPTION OF THE DRAWINGS

FIG. 1 is a schematic structural view illustrating a temperature display device according to an embodiment of the present invention.
FIG. 2 illustrates an example of an image display by the display device of FIG. 1.

### DETAILED DESCRIPTION OF THE PREFERRED EMBODIMENTS

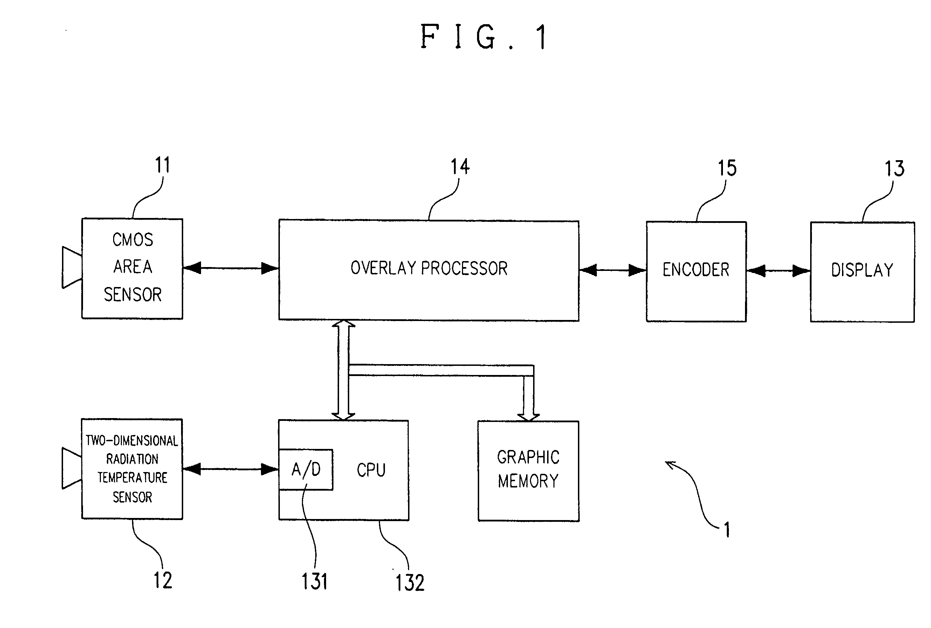

An embodiment of the present invention will be hereinafter described with reference to the attached drawings. FIG. 1 is a schematic structural view illustrating a temperature display device according to an embodiment of the present invention. As illustrated in FIG. 1, a temperature display device 1 includes an imaging device 11 for capturing a visible image, a two-dimensional radiation temperature sensor 12 located so as to be capable of non-contact measuring of temperatures at multiple points within a visual field of the imaging device 11, and a display 13 for displaying the captured image of the imaging device 11. These are placed in a housing. An optical axis of the imaging device 11 is arranged substantially parallel to an optical axis of the two-dimensional radiation temperature sensor 12 with a distance of about 15mm between them, thereby causing misalignment between both the optical axes and hence parallax between the images captured by both devices in the strict sense. However, the imaging device 11 and the two-dimensional radiation temperature sensor 12 are designed to respectively form images when the distance to the object is about 500mm or more, and each have a visual field of about 200mm² when the distance to the object is about 800mm. As a result, it can be said that the above misalignment of the optical axes is not such a degree as to become an issue. Where parallax of the images due to the misalignment of the optical axes must be strictly compensated (for example, where the visual field is narrow for close-up image capturing), a conventional optical instrument is placed in front of the imaging device 11 or the two-dimensional radiation temperature sensor 12, or an overlay processor (hereinafter described) is provided to geometrically calculate the parallax at a prior step, so that the parallax of both optical axes is compensated.

While the imaging device 11 of this embodiment is made up of a lens and a CMOS area sensor, it is not necessarily to limit the present invention to this arrangement. For example, it is possible to employ a CCD area sensor and various sensors, as long as they can capture a visible image. The two-dimensional radiation temperature sensor 12 is made up of a two-dimensional thermopile array of a 4-by-4 element square, thermopile element and the like set in array. As the display 13, a liquid crystal monitor is used so as to have the temperature display device 1 arranged entirely in a compact fashion.

Since the output of a temperature measurement element, which is a part of the two-dimensional radiation temperature sensor 12, is slow, an A/D converter 131 is placed in a CPU 132 in this embodiment so that the output data is easily obtained. Where high-speed processing is required due to increased number of elements in the two-dimensional radiation temperature sensor 12, a dedicated hardware is added so as to obtain the output data.

The CPU 132 determines which section reached an abnormal temperature by the comparison between digitalized data of the two-dimensional radiation temperature sensor 12 and a reference temperature preset in the CPU 132. Based upon this determination, the display 13 displays a predetermined information as described below.

The imaging device 11 outputs digital YUV signals, digital RGB signals and the like representative of a visual image, which are then input in an overlay processor 14. On the other hand, based upon the determination by the CPU 132 regarding temperature data, a section with abnormal temperature rise and the like obtained, hereinafter-described division lines, a measured temperature value and the like are stored in a graphic memory in the same form as that of the visual image. The division lines and the like stored in the graphic memory are overlaid on a visual image by the overlay processor 14. The temperature display device 1 is also provided with an encoder 15 between the overlay processor 14 and the display 13 so as to match the output of the overlay processor 14 to the format of the display 13. For example, where digital YUV signals are output from the imaging device 11 via the overlay processor 14 and interfaced to the display 13 with NTSC video signals, an encoder for YUV-NTSC conversion is used as the encoder 15.

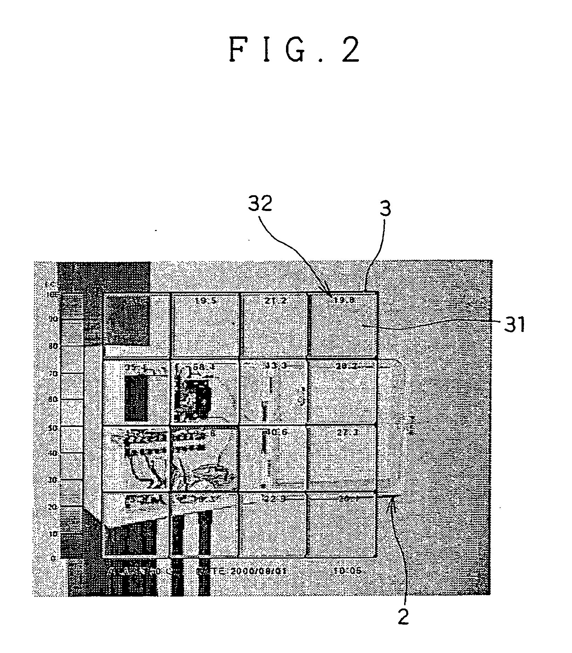

FIG. 2 illustrates an example of an image display by the display 13. As illustrated in FIG. 2, an area corresponding to the visual field of the radiation temperature sensor 12 of 4-by-4 element square is divided into 4-by-4 grid-like sections with division lines 3, and overlaid on the display 13, which simultaneously displays a captured image 2 of the imaging device 11. The division lines 3 defining each grid-like section 31 are displayed in a different color according to a temperature value measured within the corresponding grid-like section 31 (whilst the lines are illustrated in monochrome in FIG. 2, they are actually displayed in color). Accordingly, it is possible to visually recognize simultaneously both of the visible image 2, and measured temperature values that can be recognized by the divisional lines displayed in different colors, and hence easily recognize temperature measurement points and temperatures at those points. Also, a measured temperature value in each section 31 is displayed in the form of numeric digits 32, such as "19.8" within the each section. Therefore, easy recognition of temperature measurement points and temperatures at those points can also be achieved by the numeric digits 32 and the visible image 2.

Where a measured temperature values in any one of the respective sections 31 exceeds a predetermined value, the division lines 3 defining a corresponding section 31 is displayed in blinking mode. Accordingly, it is possible to visually recognize simultaneously both of the visual image 2 and an area with abnormal temperature rise (an area with its measured temperature exceeding a predetermined value), which area can be recognized by displaying the corresponding division lines 3 of the visible image 2 in blinking mode, and achieve easy recognition of the area with abnormal temperature rise. In the event of abnormal temperature rise, while not limited to this embodiment, it is possible to design the temperature display device 1 so as to display the visible image within a corresponding section 31 in blinking mode, or display the inside of a corresponding section 31 in blinking mode in a color assigned to the measured temperature value.

It is also possible to construct a temperature monitor system that includes client computers (not shown) connected to the temperature display device 1, and an administration server (not shown) connected to the client computers via the Internet, in which the administration server is capable of receiving output data of the temperature display device 1. According to this temperature monitor system, the administration server, which is connected to the Internet, is capable of receiving output data of the temperature display device 1, such as a captured image of the imaging device 11 and a measured value of the two-dimensional radiation temperature sensor 12 via the client computers and Internet. As a result, temperature control can be made even from a remote location, and abnormal temperature rise can be informed to a predetermined client computer by email, which contribute to remarkably convenient temperature control.

As described above, since the visual recognition of the visible image, and a measured temperature value recognizable by the division lines displayed in different colors can be simultaneously made, there is produced an advantage in that a temperature measurement point can be easily recognized. Also, the radiation temperature sensor can detect the temperature in two dimensional fashion, and therefore measure temperatures at multiple points, so that it is not necessary to provide plural devices. Additionally, as long as the imaging device has a predetermined resolution, accurate visual recognition of the temperature measurement points can be achieved even by the imaging device, even if the two-dimensional radiation sensor has a relatively low resolution. Thus, it is possible to manufacture the imaging device at a relatively low cost in comparison to a thermal imaging device.

## Claims

1. A temperature display device comprising an imaging device for capturing a visible image, a two-dimensional radiation temperature sensor that is located so as to be capable of non-contact measuring of temperatures at multiple points within a visual field of the imaging device, and a display for displaying the captured image of the imaging device, in which the display divides the captured image into grid-like sections with division lines and displays the same, as well as displaying the division lines in different colors according to the temperature values in the respective sections measured by the two-dimensional radiation temperature sensor.

2. A temperature display device comprising an imaging device for capturing a visible image, a two-dimensional radiation temperature sensor that is disposed so as to be capable of non-contact measuring of temperatures at multiple points within a visual field of the imaging device, and a display for displaying the captured image of the imaging device, in which the display divides the captured image into grid-like sections and displays the same, as well as displaying a measured temperature value of each grid-like section in the form of numeric digits.

3. A temperature display device comprising an imaging device for capturing a visible image, a two-dimensional radiation temperature sensor that is disposed so as to be capable of non-contact measuring of temperatures at multiple points within a visual field of the imaging device, and a display for displaying the captured image of the imaging device, in which the display divides the captured image into grid-like sections with division lines, and, if a temperature value in any one of the grid-like sections exceeds a certain value, displays corresponding division lines in blinking mode.

4. A temperature display device comprising an imaging device for capturing a visible image, a two-dimensional radiation temperature sensor that is disposed so as to be capable of non-contact measuring of temperatures at multiple points within a visual field of the imaging device, and a display for displaying the captured image of the imaging device, in which the display divides the captured image into grid-like sections with division lines, and, if a temperature value measured within any one of the grid-like sections exceeds a certain value, displays an area of the captured image in that section in blinking mode.

5. A temperature display device comprising an imaging device for capturing a visible image, a two-dimensional radiation temperature sensor that is disposed so as to be capable of non-contact measuring of temperatures at multiple points within a visual field of the imaging device, and a display for displaying the captured image of the imaging device, in which the display divides the captured image into grid-like sections with division lines, and if a temperature measured within any one of the grid-like sections exceeds a certain value, displays an area of the captured image in that section in blinking mode in a different color assigned to the measured temperature value.

6. A temperature monitor system comprising client computers connected to any one of the temperature display devices according to claims 1 to 5, and an administration server connected to the client computers via the Internet, in which the administration server is capable of receiving output data of the temperature display device.
